# EUROPÄISCHE PATENTSCHRIFT

(11) **EP 0 963 568 B1**
(45) Veröffentlichungstag und Bekanntmachung des Hinweises auf die Patenterteilung: **10.04.2002**
(21) Anmeldenummer: 98914815.0
(22) Anmeldetag: 25.02.1998
(51) Int. Cl.: G02B 21/24, G02B 7/24

(54) **OPTISCHES GERÄT MIT WENIGSTENS EINEM SCHWENKBAREN EINBLICKTUBUS**
OPTICAL DEVICE WITH AT LEAST ONE SWIVELLING OBSERVATION TUBE
APPAREIL OPTIQUE COMPRENANT AU MOINS UN TUBE D'OBSERVATION PIVOTANT

(30) Priorität: 25.02.1997 DE 19707520
(43) Veröffentlichungstag der Anmeldung: 15.12.1999
(73) Patentinhaber: Leica Microsystems AG, 9435 Heerbrugg (CH)
(72) Erfinder: SCHUCK, Manfred, D-80999 München (DE); STOECKL, Georg, D-82194 Gröbenzell (DE); KOCH, Klaus, D-82178 Puchheim (DE); GÖTZ, Alexander, D-81379 München (DE)
(74) Vertreter: Reichert, Werner F., Dr.
(86) Internationale Anmeldenummer: DE9800547
(87) Internationale Veröffentlichungsnummer: WO9838543

(56) Entgegenhaltungen:
- DE-A- 3 117 254
- DE-A- 3 305 650
- DE-A- 4 320 580
- GB-A- 637 198

## Beschreibung

### Technisches Gebiet

Die Erfindung bezieht sich auf ein optisches Gerät mit wenigstens einem Objektiv und wenigstens einem schwenkbaren Einblicktubus.

Bei derartigen optischen Geräten handelt es sich beispielsweise um Mikroskope und insbesondere um Operationsmikroskope mit zwei Abbildungskanälen für stereoskopisches Sehen.

### Stand der Technik

Optische Geräte mit einem oder zwei schwenkbaren Einblicktuben sind aus einer Reihe von Druckschriften bekannt. Nur exemplarisch wird auf folgende Druckschriften verwiesen, auf die im übrigen bezüglich der Erläuterung aller hier nicht im einzelnen erwähnten Einzelheiten bzw. Anwendungsfälle ausdrücklich verwiesen wird:

DE-PS 1 098 233, DE-OS 25 02 209, DE 26 54 778 C2, DE 31 05 018 A1, DE 31 17 254 C2, DE 33 05 650 A1, DE 37 18 843 A1, DE-GBM 79 31 427, EP 0 627 642 A1 und GB-PS 637 198.

Bei dem aus der DE 31 17 254 C2 bekannten Gerät ist der Einblicktubus um eine Achse drehbar. Gleichachsig mit der Drehachse des Einblicktubus ist ein drehbarer Spiegel angeordnet, auf den das von dem Objektiv kommende Lichtbündel von einem ersten, fest in dem Basisteil angeordneten Spiegel umgelenkt wird.

Das aus der DE 31 17 254 C2 bekannte optische Gerät mit einem schwenkbaren Einblicktubus hat damit sowohl bezüglich der Variabilität der Einblicksrichtung als auch bezüglich der Baulänge und der Apertur des optischen Systems Nachteile.

Ähnliches gilt für die aus den weiteren Druckschriften bekannten optischen Systeme bzw. Geräte.

### Beschreibung der Erfindung

Der Erfindung liegt die Aufgabe zugrunde, ein optisches Gerät mit wenigstens einem Objektiv und wenigstens einem schwenkbaren Einblicktubus anzugeben, das bei kurzer Baulänge und geringem Gewicht eine hohe Variabilität der Einblicksrichtung von typischerweise ±60°, d.h. insgesamt 120° erreicht.

Eine erfindungsgemäße Lösung dieser Aufgabe ist im Patentanspruch 1 angegeben. Weiterbildungen der Erfindung sind Gegenstand der Ansprüche 2ff.

Die Erfindung geht von dem Grundgedanken aus, einen Einblicktubus mit variabler Einblicksrichtung dadurch zu realisieren, daß der Einblicktubus nicht gedreht wird, sondern sich längs eines Kreisbogens auf dem Basisteil abwälzt. Hierdurch und durch die Verwendung zweier drehbarer Umlenkspiegel, von denen einer im Basisteil und der andere im schwenkbaren Okularträger angeordnet ist, kann bei kurzer Baulänge und geringem Gewicht ein großer Schwenkwinkel von bis zu 120° und mehr erzielt werden.

### Weiterbildungen der Erfindung sind Gegenstand der Ansprüche 2ff:

Bei der im Anspruch 2 gekennzeichneten Weiterbildung drehen sich bei einer Schwenkbewegung des Okularträgers um den Winkel α der erste Umlenkspiegel um ¼α in Richtung und der zweite Umlenkspiegel um ein ¼α relativ zum Okularträger entgegen der Schwenkbewegung des Okularträgers. Hierdurch wird die erforderliche Umlenkung des vom Objektiv kommenden Lichtbündels gleichmäßig auf die beiden Umlenkspiegel verteilt, so daß sich bei geringer Baugröße eine große Apertur des Einblicktubus ergibt.

Das erfindungsgemäße Gerät erlaubt einen großen Schwenkbereich des Okularträgers, der insbesondere ±60°und mehr betragen kann.

Das erfindungsgemäße Prinzip ist natürlich bei Geräten mit nur einem Einblicktubus, also mit monokularem Einblick anwendbar. Besonders vorteilhaft ist das erfindungsgemäße Prinzip jedoch bei Geräten, die einen Binokulartubus aufweisen, der den Einblick durch zwei getrennte Einblicköffnungen gestattet. Dabei ist es sowohl aus Platzgründen als auch aus Toleranzgründen sinnvoll, wenn die Umlenkspiegel in beiden Abbildungskanälen gemeinsam benutzt werden.

Bei der im Anspruch 6 gekennzeichneten Weiterbildung ist eine optische Einrichtung vorgesehen, die die optische Achse der eigentlichen Okulareinblicköffnung und des Okularträgers nach dem zweiten Umlenkspiegel parallel zueinander versetzt. Hierdurch wird die Ergonomie verbessert. Gemäß Anspruch 7 kann die optische Einrichtung zwei Porro-Prismen aufweisen, die bevorzugt gegeneinander um 90° gedreht sind. Die optische Einrichtung kann dabei auch zur Einstellung der Pupillendistanz - bei der Ausführungsformen, bei der Porro-Prismen verwendet werden, durch Drehen dieser Prismen - dienen. Die Ergonomie wird weiter verbessert, wenn das erfindungsgemäße Gerät in einer Aufnahme, die beispielsweise eine Ringschwalbenschwanz-Führung sein kann, um 180° oder mehr drehbar ist.

Zur Realisierung der Abwälzbewegung des Okularträgers am Basisteil sind gemäß Anspruch 11 bevorzugt Abwälzzahnräder vorgesehen, die miteinander kämmen. Eines der Abwälzzahnräder - bevorzugt das am Basisteil vorgesehene Abwälzzahnrad - kann feststehend sein, während das andere Abwälzzahnrad sich dreht.

Gemäß der im Anspruch 13 angegebenen Weiterbildung sind Getriebemittel vorgesehen, die die Umlenkspiegel entsprechend der Schwenkbewegung des Okularträgers drehen. Diese Getriebemittel können insbesondere von einem der Abwälzzahnräder angetrieben werden.

Zur Verringerung der Toleranzen und von Spielen können die Abwälzzahnräder auf beiden Seiten des Okularträgers bzw. des Basisteil vorgesehen sein. Ferner ist es bevorzugt, wenn eine Vorspanneinrichtung vorgesehen ist, die die Umlenkspiegel-Drehachsen in Richtung ihres kürzesten Abstandes vorspannt, da auch hierdurch Spiel verringert wird.

### Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:

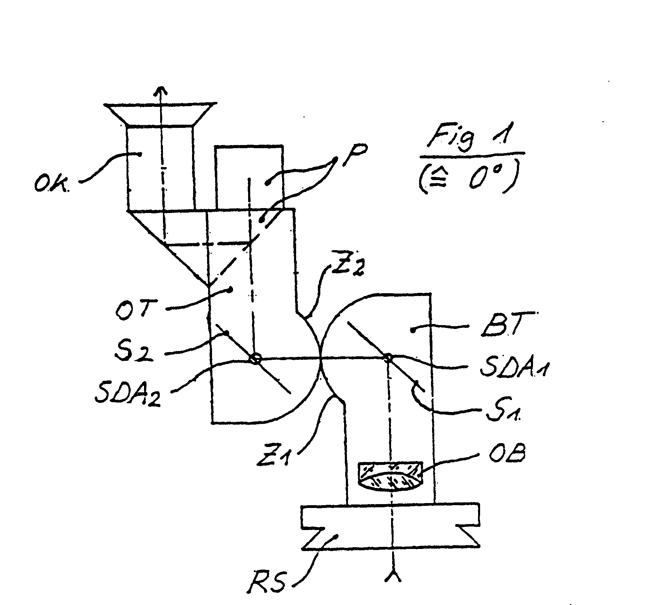

- Fig. 1-3: drei Stellungen des Einblicktubus eines erfindungsgemäßen optischen Geräts.

### Beschreibung von Ausführungsbeispielen

Figur 1 zeigt das erfindungsgemäße optische Gerät in der Grundstellung, d.h. in der Stellung, in der das Okularokar "senkrecht" nach oben zeigt. Das erfindungsgemäße Gerät weist einen Basisteil BT und einen schwenkbaren Okularträger OT auf.

In dem Basisteil BT sind ein Objektiv OB sowie ein drehbarer Umlenkspiegel S1 vorgesehen, der um eine Achse SDA 1 drehbar ist, die senkrecht auf der optischen Achse des Objektivs steht. Ferner ist der Basisteil BT mittels einer Ringschwalbenschwanz-Führung RS um 180° um die optische Achse des Objektivs OB drehbar.

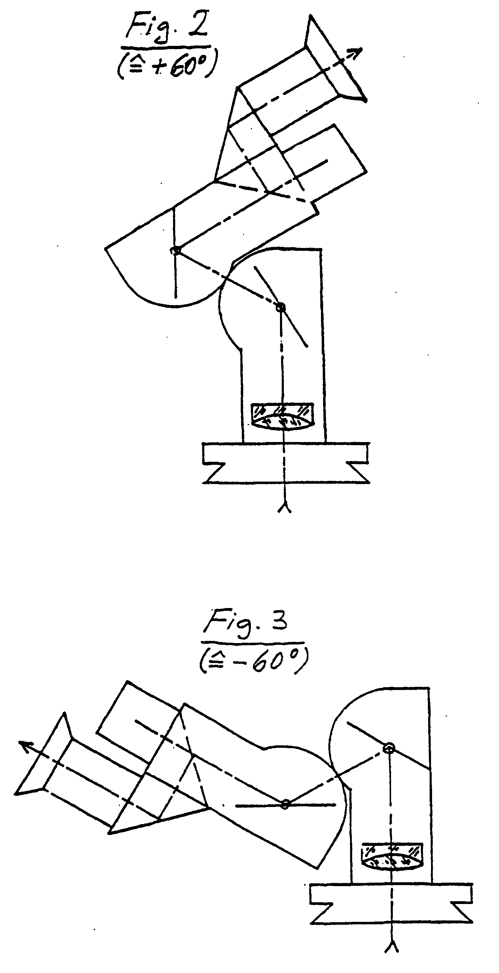

Der Okularträger OT ist zur Realisierung der Schwenkbewegung auf dem Basisteil BT längs eines Kreisbogens abwälzbar. Die Figuren 2 und 3 zeigen den Okularträger OT in den Stellungen +60° und -60° bezogen auf die in Figur 1 dargestellte Grundstellung.

In dem Okularträger OT ist ein zweiter Umlenkspiegel S2 vorgesehen, der um eine Drehachse SDA 2 drehbar ist, die auf der von dem ersten Umlenkspiegel S1 umgelenkten optischen Achse des Objektivs OB senkrecht steht. Ferner weist der Okularträger OT zwei Porro-Prismen P auf, die zur Bild-Aufrichtung sowie zur Einstellung der Pupillendistanz dienen.

Bei dem gezeigten Ausführungsbeispiel drehen sich bei einer Schwenkbewegung des Okularträgers OT um den Winkel α der erste Umlenkspiegel S1 um ¼α in Richtung und der zweite Umlenkspiegel um ¼α relativ zum Okularträger OT entgegen der Schwenkbewegung des Okularträgers.

## Patentansprüche

1. Optisches Beobachtungsgerät,
- mit einem in einem Basisteil (BT) untergebrachten Objketiv (OB) und einem in einem Okularteil (OT) untergebrachten Okular (OK), das zur Änderung des vertikalen Einblickwinkels um eine im Basisteil (BT) liegende und senkrecht zur Objektivachse ausgerichtete Drehachse (SDA1) um das Basisteil (BT) schwenkbar ist
- und mit je einem Spiegel (S1,S2) im Basisteil (BT) und im Okularteil (OT), welche die Schwenkbarkeit des Okularteils (OT) um das Basisteil (BT) gewährleisten,
- wobei beim Schwenken des Okularteils (OT) eine Getriebeanordnung den im Okularteil (OT) untergebrachten Spiegel (S2) um eine im Okularteil (OT) liegende und parallel zur Drehachse (SDA1) ausgerichtete zweite Drehachse (SDA2) um einen Bruchteil des Schwenkwinkels mitdreht,
**dadurch gekennzeichnet,**
- **daß** die Getriebeanordnung beim Schwenken des Okularteils (OT) den im Basisteil (BT) untergebrachten Spiegel (S1) um den gleichen Bruchteil des Schwenkwinkels um die Drehachse (SDA1) mitdreht,
- **daß** das Basisteil (BT) und das Okularteil (OT) an ihren Außenseiten zwei um die beiden Drehachsen (SDA1,SDA2) zylinderförmig gekrümmte Abrollbereiche (Z1,Z2) aufweisen, die in allen Winkelstellungen des Okularteils (OT) aneinander anliegen,
- und **daß** das Okularteil (OT) beim Verschwenken um das Basisteil (BT) sich am Basisteil (BT) entlang der Abrollbereiche (Z1/Z2) abwälzt.

2. Beobachtungsgerät nach Anspruch 1,
**dadurch gekennzeichnet, daß** das Okularteil (OT) um das Basisteil (BT) um bis zu 120° verschwenkbar ist.

3. Beobachtungsgerät nach Anspruch 1 oder 2,
**dadurch gekennzeichnet, daß** das Beobachtungsgerät als Binokular ausgebildet ist und die Spiegel (S1,S2) von beiden Strahlengängen gemeinsam benutzt werden.

4. Beobachtungsgerät nach Anspruch 1 oder 2,
**dadurch gekennzeichnet, daß** das Okularteil (OT) als Binokular ausgebildet ist und zwei Porroprismen eine Einstellung der Pupillendistanz gestatten.

5. Beobachtungsgerät nach einem der Ansprüche 1 bis 4, **dadurch gekennzeichnet, daß** das Basisteil (BT) in einem Ringschwalbenschwanz gelagert und um die Objektivachse drehbar ist.

6. Beobachtungsgerät nach einem der Ansprüche 1 bis 5, **dadurch gekennzeichnet, daß** feststehend am Basisteil (BT) ausgebildete Abwälzzahnräder beidseitig der Objektivachse vorgesehen sind, welche die Abwälzung des Okularteils (OT) am Basisteil (BT) unterstützen.

7. Beobachtungsgerät nach Anspruch 6,
**dadurch gekennzeichnet, daß** der Okularteil (OT) mit einem Getriebe für die Zwangsdrehung der beiden Spiegel (S1,S2) verbunden ist.

8. Beobachtungsgerät nach einem der Ansprüche 1 bis 7, **dadurch gekennzeichnet, daß** eine Vorspannungseinrichtung vorgesehen ist, die die Umlenkspiegel-Drehachsen (SDA1,SDA2) in Richtung ihres kürzesten Abstandes vorspannt.

9. Beobachtungsgerät nach einem der Ansprüche 1 bis 8, **dadurch gekennzeichnet, daß** die zylinderförmig gekrümmten Abrollbereiche (Z1,Z2) gleiche Krümmungsradien aufweisen.

10. Beobachtungsgerät nach einem der Ansprüche 1 bis 9, **dadurch gekennzeichnet, daß** die beiden Spiegel (S1,S2) zur Vermeidung von Spiel mechanisch vorgespannt sind.

## Claims

1. Optical observation apparatus,
- with an objective (OB) accommodated in a base member (BT) and an eyepiece (OK), which is accommodated in an eyepiece member (OT) and which for change in the vertical viewing angle is pivotable around the base member (BT) about an axis (SDA1) of rotation disposed in the base member (BT) and oriented perpendicularly to the objective axis
- and with a respective mirror (S1, S2) in each of the base member (BT) and the eyepiece member (OT), which mirrors ensure pivotability of the eyepiece member (OT) around the base member (BT),
- wherein on pivotation of the eyepiece member (OT) a transmission arrangement co-rotates the mirror (S2) accommodated in the eyepiece member (OT) about a second axis (SDA2) of rotation, which is disposed in the eyepiece member (OT) and oriented parallel to the axis (SDA1) of rotation, through a fraction of the pivot angle,
**characterised in that**
- the transmission arrangement on pivotation of the eyepiece member (OT) co-rotates the mirror (S1) accommodated in the base member (BT) about the axis (SDA1) of rotation through the same fraction of the pivot angle,
- the base member (BT) and the eyepiece member (OT) have at the outer sides thereof two roiling guide regions (Z1, Z2), which are cylindrically curved about the two axes (SDA1, SDA2) of rotation and which bear against one another in all angle settings of the eyepiece member (OT) and
- the eyepiece member (OT) on pivotation around the base member (BT) rolls at the base member (BT) along the rolling guide regions (Z1, Z2).

2. Observation apparatus according to claim 1, **characterised in that** the eyepiece member (OT) is pivotable around the base member (BT) by up to 120°.

3. Observation apparatus according to claim 1 or 2, **characterised in that** the observation apparatus is constructed as binoculars and the mirrors (S1, S2) of two beam paths are used in common.

4. Observation apparatus according to claim 1 or 2, **characterised in that** the eyepiece member (OT) is constructed as binoculars and two Porro prisms allow a setting of the pupil distance.

5. Observation apparatus according to one of claims 1 to 4, **characterised in that** the base member (BT) is mounted in an annular dovetail and is rotatable about the objective axis.

6. Observation apparatus according to one of claims 1 to 5, **characterised in that** rolling guide gearwheels formed in stationary location at the base member (BT) are provided at both sides of the objective axis and assist the rolling guidance of the eyepiece member (OT) at the base member (BT).

7. Observation apparatus according to claim 6, **characterised in that** the eyepiece member (OT) is connected with a transmission for constrained rotation of the two mirrors (S1, S2).

8. Observation apparatus according to one of claims 1 to 7, **characterised in that** a biassing device is provided which biases the axes (SDA1, SDA2) of rotation of the deflecting mirrors in the direction of the shortest spacing of the axes.

9. Observation apparatus according to one of claims 1 to 8, **characterised in that** the cylindrically curved rolling guide regions (Z1, Z2) have the same radii of curvature.

10. Observation apparatus according to one of claims 1 to 9, **characterised in that** the two mirrors (S1, S2) are mechanically biassed for avoidance of play.

## Revendications

1. Appareil d'observation optique,
- avec un objectif (OB) logé dans une partie de base (BT) et un oculaire (OK) logé dans une partie d'oculaire (OT) qui, pour la modification de l'angle d'observation vertical, peut pivoter autour de la partie de base (BT), autour d'un axe de rotation (SDA1) situé dans la partie de base (BT) et orienté perpendiculairement à l'axe de l'objectif,
- et avec respectivement un miroir (S1, S2) dans la partie de base (BT) et dans la partie d'oculaire (OT) qui assurent l'aptitude au pivotement de la partie d'oculaire (OT) autour de la partie de base (BT),
- où lors du pivotement de la partie d'oculaire (OT), un agencement d'engrenage fait tourner le miroir (S2) logé dans la partie d'oculaire (OT) autour d'un deuxième axe de rotation (SDA2) situé dans la partie d'oculaire (OT) et orienté parallèlement à l'axe de rotation (SDA1) selon une fraction de l'angle de pivotement,
**caractérisé**
- **en ce que** l'agencement d'engrenage, lors du pivotement de la partie d'oculaire (OT), fait tourner le miroir (S1) logé dans la partie de base (BT) selon la même fraction de l'angle de pivotement autour de l'axe de rotation (SDA1),
- **en ce que** la partie de base (BT) et la partie d'oculaire (OT) présentent à leurs côtés extérieurs deux zones de roulement (Z1, Z2) courbées en forme de cylindre autour des deux axes de rotation (SDA1, SDA2) qui, dans toutes les positions angulaires de la partie d'oculaire (OT) s'appliquent l'une contre l'autre,
- et **en ce que** la partie d'oculaire (OT), lors du pivotement autour de la partie de base (BT), roule à la partie de base (BT) le long des zones de roulement (Z1, Z2).

2. Appareil d'observation selon la revendication 1, **caractérisé en ce que** la partie d'oculaire (OT) peut être amenée à pivoter autour de la partie de base (BT) jusqu'à 120° environ.

3. Appareil d'observation selon la revendication 1 ou 2, **caractérisé en ce que** l'appareil d'observation est réalisé comme binoculaire et que les miroirs (S1, S2) sont utilisés en commun par les deux marches des rayons.

4. Appareil d'observation selon la revendication 1 ou 2, **caractérisé en ce que** la partie d'oculaire (OT) est réalisée comme binoculaire et que deux prismes de Porro permettent un réglage de la distance des pupilles.

5. Appareil d'observation selon l'une des revendications 1 à 4, **caractérisé en ce que** la partie de base (BT) est logée dans une queue d'aronde annulaire et est apte à tourner autour de l'axe de l'objectif.

6. Appareil d'observation selon l'une des revendications 1 à 5, **caractérisé en ce que** sont prévues des roues à denture développante réalisées d'une manière fixe à la partie de base (BT) des deux côtés de l'axe de l'objectif qui contribuent au roulement de la partie d'oculaire (OT) à la partie de base (BT).

7. Appareil d'observation selon la revendication 6, **caractérisé en ce que** la partie d'oculaire (OT) est reliée à un engrenage pour la rotation forcée des deux miroirs (S1, S2).

8. Appareil d'observation selon l'une des revendications 1 à 7, **caractérisé en ce qu'**il est prévu une installation de précontrainte qui précontraint les axes de rotation des miroirs de déviation (SDA1, SDA2) en direction de leur écart le plus court.

9. Appareil d'observation selon l'une des revendications 1 à 8, **caractérisé en ce que** les zones de roulement courbées en forme de cylindre (Z1, Z2) ont les mêmes rayons de courbure.

10. Appareil d'observation selon l'une des revendications 1 à 9, **caractérisé en ce que** les deux miroirs (S1, S2), pour éviter du jeu, sont précontraints mécaniquement.
